# EUROPEAN PATENT SPECIFICATION

(11) **EP 4 119 011 B1**
(45) Date of publication and mention of the grant of the patent: **24.04.2024**
(21) Application number: 22184675.1
(22) Date of filing: 13.07.2022
(51) Int. Cl.: A47J 31/44

(54) **BEVERAGE-MAKING MACHINE**
GETRÄNKEZUBEREITUNGSMASCHINE
MACHINE À PRÉPARER DES BOISSONS

(30) Priority: 15.07.2021 IT 202100018791
(43) Date of publication of application: 18.01.2023
(73) Proprietor: Cimbali Group S.p.A., 20082 Binasco (MI) (IT)
(72) Inventor: MACRO, Giulio, 20082 Binasco MI (IT)
(74) Representative: Perani & Partners S.p.A.

(56) References cited:
- WO-A1-2016/177416
- CN-U- 202 312 876
- CN-U- 203 138 089
- US-A1- 2021 169 265
- US-B2- 7 478 584

## Description

The present invention relates to a beverage-making machine. The beverage machine is designed for both professional and home use in making beverages, such as espresso, tea or cappuccino.

Beverage-making machines are known in the art which have components designed to adjust the distance between the dispensing unit and the container adapted to receive the beverage from the dispensing unit.

EP3096659A1 discloses a beverage dispenser comprising a drip plate. The beverage dispenser comprises female connection members which are coupled with respective male connection members of the drip plate. The drip plate assembly (1) comprises a plurality of female connectors, at different heights to keep the drip plate at a desired distance from a beverage dispenser. Furthermore a locking mechanism is provided to lock the plate to the beverage dispenser in view of increasing its stability.

CN203436182U discloses a device for changing the position of a cup between a high position and a low position. The device comprises a positioning plate which, in the low position, has a cavity facing a beverage dispenser. The bottom of the cup rests on the bottom of the cavity. In the high configuration, the positioning plate cavity faces away from the beverage dispenser. High-low position switching is made by rotating the positioning plate.

One drawback of the beverage dispenser of EP3096659A1 is that it is impractical, especially for professional use. The beverage-making process is slowed down because the coupling of the male connection member with the female connection member may require multiple attempts, in particular if there are more than one connection member. The locking mechanism further slows down the beverage making speed as a user is required move the locking mechanism at each height change. In addition, the plate is not supported along the support base and may thus be broken upon engagement of the male connection member.

In CN203436182U the device for changing the position of a container has an aesthetic impact on the beverage-making machine on which it is applied. Furthermore, a user might use the device with a cup having a wrong size. Finally, the device can be used with one cup at a time, which slows down the beverage-making process

US2021/169265 A1 discloses a beverage-making machine comprising the features of the preamble of claim 1.

### SUMMARY OF THE INVENTION

Therefore, the technical purpose of the present invention is to provide a beverage-making machine that can obviate the above mentioned prior art drawbacks.

In particular, the present invention has the object to provide a beverage-making machine that allows a beverage container to be conveniently placed at a desired distance from a beverage dispenser.

The aforementioned technical purpose and objects are substantially fulfilled by a beverage-making machine that comprises the technical features as disclosed in one or more of the accompanying claims.

In particular, a beverage-making machine comprises an outer casing, a beverage dispensing unit and a tray arranged below the beverage dispensing unit.

The tray comprises a vessel for collecting waste liquids, a movable support and attachment members.

The vessel comprises a bottom, a plurality of sides projecting from the bottom, which define a peripheral edge and support structures arranged on the bottom.

The attachment members are configured to removably attach the movable support to the vessel.

The movable support is configured to support a container adapted to receive the beverage dispensed by the beverage dispensing unit and comprises a a flat portion, walls projecting from the flat portion and a first and a second bearing portion.

The movable support reversibly alternates between a raised configuration, in which the first bearing portion contacts the peripheral edge of the vessel and the attachment members are attached; and a lowered configuration, in which the second bearing portion of the movable support contacts the peripheral edge of the vessel.

The above described beverage-making machine solves the technical problem by including a tray that can be quickly adjusted. This is possible because the attachment members can be easily attached and the support portions provide stability to the movable support. In addition, the tray may be employed on existing beverage-making machines. Finally, the tray has no aesthetic impact on the product and is functional as it allows a user to operate on a plurality of containers during the beverage-making process.

### LIST OF FIGURES

Further features and advantages of the present invention will result more clearly from the illustrative, non-limiting description of a preferred, non-exclusive embodiment of a beverage-making machine as shown in the annexed drawings, in which:
- Figure 1 is a front view of the beverage-making machine of the present invention;
- Figure 2 is a cross-sectional perspective view of a tray in a raised configurati on;
- Figure 3 is a cross-sectional perspective view of the tray of Figure 2 in a lowered configuration;
- Figure 4 is a perspective view of a vessel of the tray of Figures 2 and 3;
- Figure 5 is a perspective view of a movable support of the tray of Figures 2 and 3;
- Figure 6 is a cross-sectional perspective view of the tray in the raised configuration of Figure 2, where the movable support is engaged with a small container.
- Figure 7 is a cross sectional perspective view of the tray in the lowered configuration of Figure 3, where the movable support is engaged with a large container.

### DETAILED DESCRIPTION

Referring to the accompanying figures, numeral 1 designates a beverage-making machine according to the present invention.

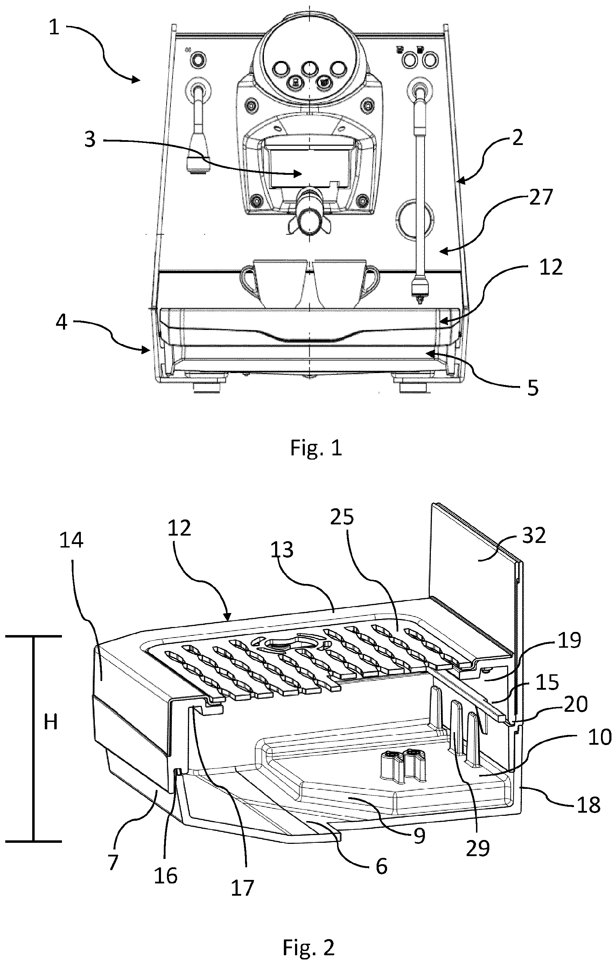

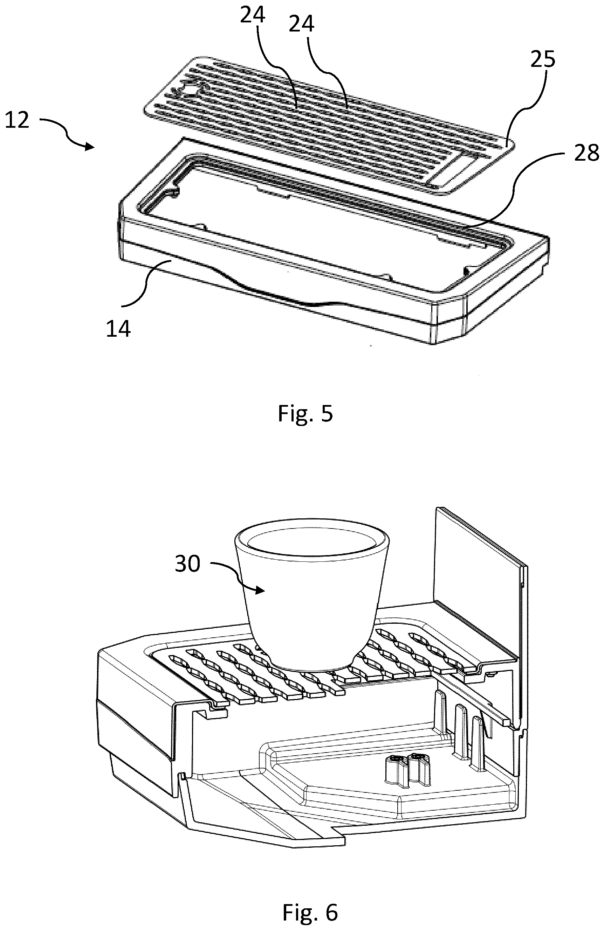

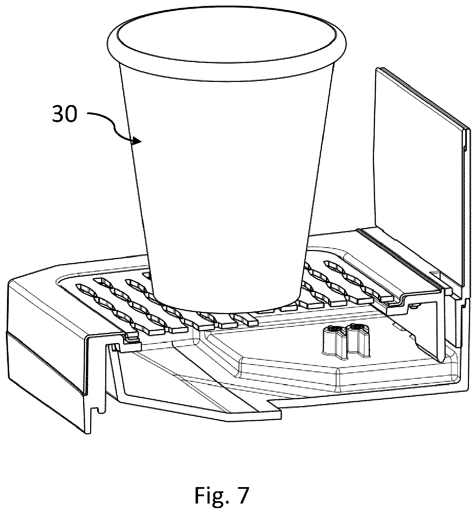

The beverage-making machine 1 as shown in Figure 1, comprises an outer casing 2, a beverage dispensing unit 3 located on a surface 27 of the outer casing 2, and a tray 4 located below the beverage dispensing unit 3. The beverage-making machine 1 can be conveniently used with containers adapted to receive the beverage being dispensed, such as those as shown in Figure 6 and Figure 7.

The tray 4 comprises a vessel 5 and a mobile support 12.

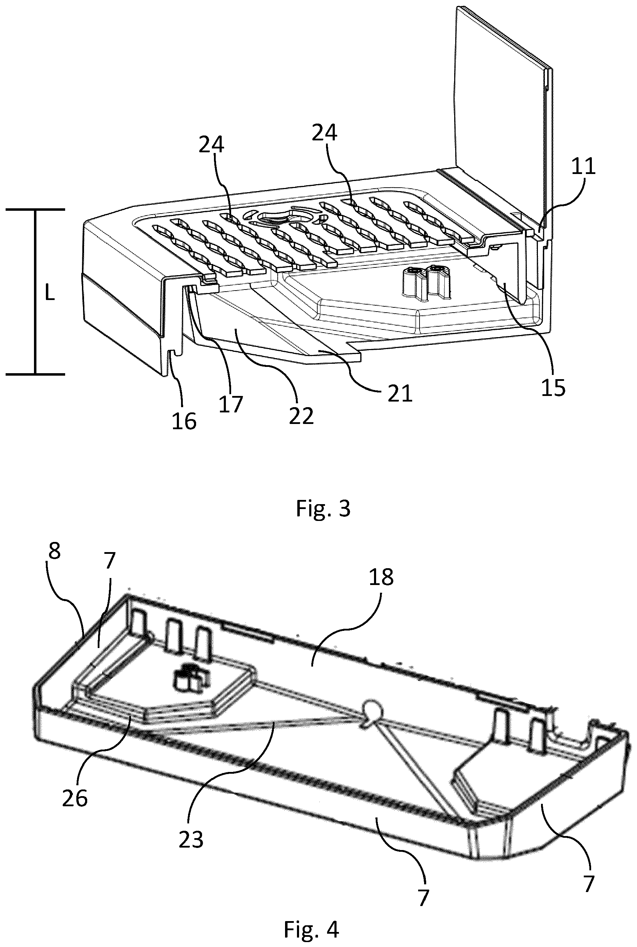

The vessel 5 is shown in Figure 4 and has the purpose to collect waste liquids from the beverage dispensing unit 3 or from the container adapted to receive the beverage being dispensed. The vessel 5 comprises a bottom 6 comprising: a flat part 21, facing the beverage-making machine 1; drain channels 23, located on the flat part 21 and configured to channel waste liquids to a collection vessel, not shown; a sloping part 22, for allowing the waste liquids to flow toward the drain channels 23. The vessel 5 comprises a plurality of sides 7 which project from the bottom 6 and define a peripheral edge 8. The vessel 5 comprises support structures 9, each comprising a contact portion 10 and projections 29. The contact portions 10 are raised from the bottom 6 by lateral supports 26 and are parallel to the flat portion 21 of the bottom 6. The projections 29 are placed on the contact portions 10 and project out of the contact portions 10 in a direction transverse to the flat portion 21 of the bottom 6.

The tray 4 comprises attachment members 11, 15, 32, which comprise a connecting element 32, vessel-attaching members and movable support-attaching members The vessel-attaching members comprise projections 29 and a rear side 18 of the vessel 5 and attach the connecting element 32 to the vessel 5 so that the connecting element 32 will fit between the projections 29 and the rear side 18. The movable support-attaching members attach the movable support 12 to the connecting element 32. The movable support-attaching members comprise first attachment members 11, for example slots, formed on the connecting element 32, as shown in Figure 3, and second attachment members 15, for example appendages, formed on a wall 19 of the movable support 12. The second attachment members 15 are configured to be coupled with the first attachment members 11 and reversibly attach the movable support 12 to the vessel 5. The kind of attachment between the first attachment members 11 and the second attachment members 15 may be, for example, a snap-fit attachment.

The movable support 12 as shown in Figure 5 is configured to support the container adapted to receive the beverage being dispensed. The movable support 12 comprises a flat portion 13, parallel to the flat part 21 of the bottom 6 of the vessel 5, on which the container adapted to receive the beverage being dispensed is placed. It shall be noted that the flat part 13 may comprises a seat 28 and a support base 25 that can be reversibly removed from the seat 28. In addition, each second attachment member 15 has one end 20 arranged on an alignment plane parallel to the flat portion 13 of the movable support 12. The support base 25 comprises a plurality of holes 24 to allow waste liquids to flow toward the vessel 5. Furthermore, the movable support 12 comprises walls 14 that project from the flat portion 13.

The movable support 12 comprises, on at least one inner surface, not shown, a first bearing portion 16 and a second bearing portion 17 configured to engage with the peripheral edge 8 of the sides 7 of the vessel 5. In particular, the first 16 and second 17 bearing portions comprise first and second seats respectively, which are configured to engage with the peripheral edge 8 of the sides 7 of the vessel 5. Furthermore, the first and second seats comprise first and second grooves, respectively, configured to engage with the peripheral edge 8 of the sides 7 of the vessel 5.

It shall be noted that the movable support 12 may reversibly alternate between a raised configuration and a lowered configuration. In the raised configuration, as shown in Figure 2, the first bearing portion 16 of the movable support 12 contacts the peripheral edge 8 of the vessel 5 and the first attachment member 11 and the second attachment member 15 are attached. In the lowered configuration, as shown in Figure 3, the second bearing portion 17 of the movable support 12 contacts the peripheral edge 8 of the vessel 5 and the second attachment members 15 abut each contact portion 10 of the support structures 9 and the projections 29. It shall be noted that the tray 4 in the raised configuration has a height H greater than a height L of the tray 4 in the lowered configuration. Furthermore, the movable support 12 in the lowered configuration is translated in a direction parallel to the bottom 6 away from the rear side 18 attached to the connecting element 32. The raised configuration is preferable for a small container 30, as shown in Figure 6, such as an espresso cup with a capacity of approximately 70 grams. The lowered configuration is preferable for a large container 31, as shown in Figure 7, such as a cappuccino cup, having a capacity of about 150 grams, or an Americano cup, having a capacity of about 400 grams.

It should be noted that the wall 19 of the movable support 12, on which the second attachment members 15 are arranged, is the wall that, in the raised configuration, faces the rear side 18 of the vessel 5 attached to the connecting element 32.

Furthermore, the movable support 12, in the lowered configuration, is translated in a direction parallel to the flat part 21 of the bottom 6 away from the the rear side 18 attached to the connecting element 32.

## Claims

1. A beverage-making machine (1) comprising an outer casing (2), a beverage dispensing unit (3) and a tray (4) arranged below the beverage dispensing unit (3), wherein the tray comprises:
- a vessel (5) for collecting waste liquids; the vessel (5) comprising a bottom (6), a plurality of sides (7) projecting from the bottom (6) and defining a peripheral edge (8), support structures (9) arranged on the bottom (6), each support structure (9) comprising a contact portion (10);
- a movable support (12) designed to be removably attached to the vessel (5) and configured to support a container adapted to receive the beverage dispensed by the beverage dispensing unit (3); the movable support (12) comprising a flat portion (13), walls (14) projecting from the flat portion (13) and a first and a second bearing portions (16, 17) on at least one wall (14);
- attachment members (11, 15, 32) configured to removably attach the movable support (12) to the vessel (5);
the movable support (12) being able to reversibly alternate between a raised configuration, in which the first bearing portion (16) of the movable support (12) contacts the peripheral edge (8) of the vessel (5) and the attachment members (11, 15, 32) are attached, and a lowered configuration, in which the second bearing portion (17) of the movable support (12) contacts the peripheral edge (8) of the vessel (5) and at least part of the attachment members (11, 15, 32) is released,
**characterized in that** the attachment members comprise:
- a connecting element (32) which connects the vessel (5) to the movable support (12);
- vessel-attaching members which attach the connecting element (32) to the vessel (5);
- movable support-attaching members which attach the movable support (12) to the connecting element (32).

2. A beverage-making machine as claimed in claim 1, wherein the vessel-attaching members comprise projections (29) formed on the vessel (5) which couple to a rear side (18) of the vessel (5) so that the connecting element (32) will be arranged between the projections (29) and said rear side (18) of the vessel (5).

3. A beverage-making machine as claimed in claim 1 or 2, wherein the movable support-attaching members comprise first attachment members (11) formed on the connecting element (32) which couple with second attachment members (15) formed on a wall (19) of the movable support (12).

4. A beverage-making machine as claimed in claim 3, wherein the second attachment members (15) in the lowered configuration abut each contact portion (10) of the support structures (9) and the projections (29).

5. A beverage-making machine as claimed in claim 3 or 4, wherein the first attachment members (11) and the second attachment members (15) form a snap fit.

6. A beverage-making machine as claimed in any of claims 3 to 5, wherein the first attachment members (11) comprise slots and the second attachment members (15) comprise appendages configured to couple with said slots.

7. A beverage-making machine as claimed in any of claims 3 to 6, wherein the first attachment members (11) are arranged on the connecting element (32) at a rear side (18) of the vessel (5).

8. A beverage-making machine as claimed in any of claims 3 to 7,wherein the second attachment members (15) of the movable support (12) are arranged on a wall (19) which, in the raised configuration, faces the rear side (18) of the vessel (5), which comprises the first attachment members (11).

9. A beverage-making machine as claimed in any of claims 3 to 8, wherein each second attachment member (15) has one end (20) arranged on an alignment plane substantially parallel to the flat portion (13) of the movable support (12).

10. A beverage-making machine as claimed in any of the preceding claims, wherein the first (16) and second (17) bearing portions comprise first and second seats respectively, which engage with the peripheral edge (8) of the sides (7) of the vessel (5).

11. A beverage-making machine as claimed in claim 10, wherein the first and second seats comprise first and second grooves which engage with the peripheral edge (8) of the sides (7) of the vessel (5).

12. A beverage-making machine as claimed in any of the preceding claims, wherein the walls (14) of the movable support (12) have an inner surface (20), on which the first (16) and second (17) bearing portions are placed.

13. A beverage-making machine as claimed in any of the preceding claims, wherein the height (L) of the tray in the lowered configuration is less than the height (H) of the tray in the raised configuration; wherein the movable support (12), in the lowered configuration, is shifted, along a direction parallel to the bottom (6), away from the rear side (18) with the first coupling members (11).

## Patentansprüche

1. Getränkezubereitungsmaschine (1), umfassend ein Außengehäuse (2), eine Getränkeausgabeeinheit (3) und eine Schale (4), die unter der Getränkeausgabeeinheit (3) angeordnet ist, wobei die Schale Folgendes umfasst:
- einen Behälter (5) zum Sammeln von Abfallflüssigkeiten; wobei der Behälter (5) einen Boden (6), eine Vielzahl von Seiten (7), die vom Boden (6) vorstehen und einen Umfangsrand (8) definieren, Stützstrukturen (9), die am Boden (6) angeordnet sind, umfasst, wobei jede Stützstruktur (9) einen Kontaktabschnitt (10) umfasst;
- einen beweglichen Träger (12), der so gestaltet ist, dass er abnehmbar an dem Behälter (5) angebracht werden kann, und der so ausgebildet ist, dass er ein Gefäß trägt, das so angepasst ist, dass es das von der Getränkeausgabeeinheit (3) ausgegebene Getränk aufnehmen kann; wobei der bewegliche Träger (12) einen flachen Abschnitt (13), Wände (14), die von dem flachen Abschnitt (13) vorstehen, und einen ersten und einen zweiten Lagerabschnitt (16, 17) an mindestens einer Wand (14) umfasst;
- Befestigungselemente (11, 15, 32), die dazu ausgebildet sind, den beweglichen Träger (12) abnehmbar an dem Behälter (5) zu befestigen;
wobei der bewegliche Träger (12) in der Lage ist, reversibel zwischen einer angehobenen Konfiguration, in der der erste Lagerabschnitt (16) des beweglichen Trägers (12) den Umfangsrand (8) des Behälters (5) kontaktiert und die Befestigungselemente (11, 15, 32) befestigt sind, und einer abgesenkten Konfiguration, in der der zweite Lagerabschnitt (17) des beweglichen Trägers (12) den Umfangsrand (8) des Behälters (5) kontaktiert und zumindest ein Teil der Befestigungselemente (11, 15, 32) gelöst ist, zu wechseln,
**dadurch gekennzeichnet, dass** die Befestigungselemente Folgendes umfassen:
- ein Verbindungselement (32), das den Behälter (5) mit dem beweglichen Träger (12) verbindet;
- Behälterbefestigungselemente, die das Verbindungselement (32) an dem Behälter (5) befestigen;
- bewegliche Trägerbefestigungselemente, die den beweglichen Träger (12) an dem Verbindungselement (32) befestigen.

2. Getränkezubereitungsmaschine nach Anspruch 1, wobei die Behälterbefestigungselemente an dem Behälter (5) ausgebildete Vorsprünge (29) umfassen, die mit einer Rückseite (18) des Behälters (5) gekoppelt sind, sodass das Verbindungselement (32) zwischen den Vorsprüngen (29) und der Rückseite (18) des Behälters (5) angeordnet ist.

3. Getränkeherstellungsmaschine nach Anspruch 1 oder 2, wobei die beweglichen Trägerbefestigungselemente erste Befestigungselemente (11) umfassen, die an dem Verbindungselement (32) gebildet sind, die mit zweiten Befestigungselementen (15) gekoppelt sind, die an einer Wand (19) des beweglichen Trägers (12) gebildet sind.

4. Getränkezubereitungsmaschine nach Anspruch 3, wobei die zweiten Befestigungselemente (15) in der abgesenkten Konfiguration an jedem Kontaktabschnitt (10) der Trägerstrukturen (9) und der Vorsprünge (29) anliegen.

5. Getränkezubereitungsmaschine nach Anspruch 3 oder 4, wobei die ersten Befestigungselemente (11) und die zweiten Befestigungselemente (15) eine Schnappverbidung bilden.

6. Getränkezubereitungsmaschine nach einem der Ansprüche 3 bis 5, wobei die ersten Befestigungselemente (11) Schlitze umfassen und die zweiten Befestigungselemente (15) Fortsätze umfassen, die so ausgebildet sind, dass sie sich mit den Schlitzen verbinden.

7. Getränkezubereitungsmaschine nach einem der Ansprüche 3 bis 6, wobei die ersten Befestigungselemente (11) an dem Verbindungselement (32) an einer Rückseite (18) des Behälters (5) angeordnet sind.

8. Getränkezubereitungsmaschine nach einem der Ansprüche 3 bis 7, wobei die zweiten Befestigungselemente (15) des beweglichen Trägers (12) an einer Wand (19) angeordnet sind, die in der angehobenen Konfiguration der Rückseite (18) des Behälters (5) zugewandt ist, der die ersten Befestigungselemente (11) umfasst.

9. Getränkezubereitungsmaschine nach einem der Ansprüche 3 bis 8, wobei jedes zweite Befestigungselement (15) ein Ende (20) aufweist, das auf einer Ausrichtebene im Wesentlichen parallel zum flachen Abschnitt (13) des beweglichen Trägers (12) angeordnet ist.

10. Getränkezubereitungsmaschine nach einem der vorhergehenden Ansprüche, wobei der erste (16) und der zweite (17) Lagerabschnitt einen ersten bzw. einen zweiten Sitz umfassen, die mit dem Umfangsrand (8) der Seiten (7) des Behälters (5) in Eingriff stehen.

11. Getränkezubereitungsmaschine nach Anspruch 10, wobei die ersten und zweiten Sitze erste und zweite Nuten umfassen, die mit dem Umfangsrand (8) der Seiten (7) des Behälters (5) in Eingriff stehen.

12. Getränkeherstellungsmaschine nach einem der vorhergehenden Ansprüche, wobei die Wände (14) des beweglichen Trägers (12) eine Innenfläche (20) aufweisen, auf der der erste (16) und der zweite (17) Lagerabschnitt angeordnet sind.

13. Getränkezubereitungsmaschine nach einem der vorhergehenden Ansprüche, wobei die Höhe (L) der Schale in der abgesenkten Konfiguration geringer ist als die Höhe (H) der Schale in der angehobenen Konfiguration; wobei der bewegliche Träger (12) in der abgesenkten Konfiguration entlang einer Richtung parallel zum Boden (6) von der Rückseite (18) mit den ersten Kopplungselementen (11) weg verschoben wird.

## Revendications

1. Machine de production de boissons (1) comprenant un boîtier extérieur (2), une unité de distribution de boissons (3) et un plateau (4) disposé sous l'unité de distribution de boissons (3), dans laquelle le plateau comprend :
- un récipient (5) pour collecter les déchets liquides ; le récipient (5) comprenant un fond (6), une pluralité de côtés (7) faisant saillie du fond (6) et définissant un bord périphérique (8), des structures de support (9) disposées sur le fond (6), chaque structure de support (9) comprenant une partie de contact (10) ;
- un support mobile (12) conçu pour être fixé de manière amovible au récipient (5) et configuré pour supporter un conteneur adapté pour recevoir la boisson distribuée par l'unité de distribution de boissons (3) ; le support mobile (12) comprenant une partie plate (13), des parois (14) faisant saillie à partir de la partie plate (13) et une première et une seconde parties d'appui (16, 17) sur au moins une paroi (14) ;
- des éléments d'attache (11, 15, 32) configurés pour fixer de manière amovible le support mobile (12) au récipient (5) ;
le support mobile (12) pouvant alterner de manière réversible entre une configuration surélevée, dans laquelle la première partie d'appui (16) du support mobile (12) entre en contact avec le bord périphérique (8) du récipient (5) et les éléments d'attache (11, 15, 32) sont fixés, et une configuration abaissée, dans laquelle la seconde partie d'appui (17) du support mobile (12) entre en contact avec le bord périphérique (8) du récipient (5) et au moins une partie des éléments d'attache (11, 15, 32) est libérée,
**caractérisée en ce que** les éléments d'attache comprennent :
- un élément de liaison (32) qui relie le récipient (5) au support mobile (12) ;
- des éléments d'attache du récipient qui fixent l'élément de liaison (32) au récipient (5) ;
- des éléments d'attache du support mobile qui fixent le support mobile (12) à l'élément de liaison (32).

2. Machine de production de boissons selon la revendication 1, dans laquelle les éléments d'attache du récipient comprennent des saillies (29) formées sur le récipient (5) qui sont couplées à un côté arrière (18) du récipient (5) de sorte que l'élément de liaison (32) soit agencé entre les saillies (29) et ledit côté arrière (18) du récipient (5).

3. Machine de production de boissons selon la revendication 1 ou 2, dans laquelle les éléments d'attache du support mobile comprennent des premiers éléments d'attache (11) formés sur l'élément de liaison (32) qui sont couplés aux seconds éléments d'attache (15) formés sur une paroi (19) du support mobile (12).

4. Machine de production de boissons selon la revendication 3, dans laquelle les seconds éléments d'attache (15) dans la configuration abaissée viennent en butée contre chaque partie de contact (10) des structures de support (9) et des saillies (29).

5. Machine de production de boissons selon la revendication 3 ou 4, dans laquelle les premiers éléments d'attache (11) et les seconds éléments d'attache (15) forment un ajustement par encliquetage.

6. Machine de production de boissons selon l'une quelconque des revendications 3 à 5, dans laquelle les premiers éléments d'attache (11) comprennent des fentes et les seconds éléments d'attache (15) comprennent des appendices configurés pour être couplés auxdites fentes.

7. Machine de production de boissons selon l'une quelconque des revendications 3 à 6, dans laquelle les premiers éléments d'attache (11) sont agencés sur l'élément de liaison (32) au niveau d'un côté arrière (18) du récipient (5).

8. Machine de production de boissons selon l'une quelconque des revendications 3 à 7, dans laquelle les seconds éléments d'attache (15) du support mobile (12) sont agencés sur une paroi (19) qui, dans la configuration surélevée, fait face au côté arrière (18) du récipient (5), qui comprend les premiers éléments d'attache (11).

9. Machine de production de boissons selon l'une quelconque des revendications 3 à 8, dans laquelle chaque second élément d'attache (15) a une extrémité (20) agencée sur un plan d'alignement sensiblement parallèle à la partie plate (13) du support mobile (12).

10. Machine de production de boissons selon l'une quelconque des revendications précédentes, dans laquelle les première (16) et seconde (17) parties d'appui comprennent des premier et second sièges respectivement, qui se mettent en prise avec le bord périphérique (8) des côtés (7) du récipient (5).

11. Machine de production de boissons selon la revendication 10, dans laquelle les premier et second sièges comprennent des première et seconde rainures qui se mettent en prise avec le bord périphérique (8) des côtés (7) du récipient (5).

12. Machine de production de boissons selon l'une quelconque des revendications précédentes, dans laquelle les parois (14) du support mobile (12) ont une surface intérieure (20), sur laquelle les première (16) et seconde (17) parties d'appui sont placées.

13. Machine de production de boissons selon l'une quelconque des revendications précédentes, dans laquelle la hauteur (L) du plateau dans la configuration abaissée est inférieure à la hauteur (H) du plateau dans la configuration surélevée ; dans laquelle le support mobile (12), dans la configuration abaissée, est déplacé, le long d'une direction parallèle au fond (6), loin du côté arrière (18) avec les premiers éléments de couplage (11).
